# EUROPEAN PATENT SPECIFICATION

(11) **EP 3 299 861 B1**
(45) Date of publication and mention of the grant of the patent: **08.04.2026**
(21) Application number: 17193165.2
(22) Date of filing: 26.09.2017
(51) Int. Cl.: G02B 21/00, G01J 3/02, G01J 3/44

(54) **CONFOCAL RAMAN MICROSCOPE**
KONFOKALES RAMAN-MIKROSKOP
MICROSCOPE RAMAN CONFOCAL

(30) Priority: 26.09.2016 JP 2016186816
(43) Date of publication of application: 28.03.2018
(73) Proprietor: Jasco Corporation, Hachioji-shi Tokyo 192-8537 (JP)
(72) Inventor: Aizawa, Kento, Tokyo 192-8537 (JP); Inoue, Tsutomu, Tokyo 192-8537 (JP)
(74) Representative: Henkel & Partner mbB

(56) References cited:
- WO-A1-2010/004720
- WO-A1-2016/135177
- US-A1- 2009 323 058
- US-A1- 2015 015 878
- US-A1- 2017 234 797
- CORMACK I ET AL: "Fluorescence suppression within Raman spectroscopy using annular beam excitation", APPLIED PHYSICS LETTERS, A I P PUBLISHING LLC, US, vol. 91, no. 2, 12 July 2007 (2007-07-12), pages 23903 - 23903, XP012100114, ISSN: 0003-6951, DOI: 10.1063/1.2756311

## Description

### FIELD OF THE INVENTION

The present invention relates to a confocal Raman microscope, and, in particular, to an improvement in detecting good Raman scattering light to enhance analysis accuracy.

### BACKGROUND OF THE INVENTION

When a light having a specific wavelength is irradiated onto a substance, its irradiation light is scattered, and a part of the scattered light becomes Raman scattering light having a wavelength different from that of the irradiation light.

The wavenumber of this Raman scattering light becomes a specific wavenumber based on vibrations and rotations of molecules that constitute the sample. The wavenumber is specific according to molecules, and thus the substance can be identified.

Further, Raman intensity is proportional to the intensity and the number of molecules (concentration) of the irradiation light, and thus specific components of the sample can be quantitatively determined.

Consequently, various Raman microscopes have been developed. In particular, confocal Raman microscopes can effectively detect light at a focused position by arranging a pin hole and the like at a position that is conjugated with a focal position of the objective lens (an imaging point). Therefore, confocal Raman microscopes are used for various measurements and analyses.

On the other hand, Raman scattering light is an extremely weak spectrum (10⁻⁶ times weaker than Rayleigh scattering light, of which a light having the same wavelength as the incident light is scattered), and thus an accurate analysis is prevented due to various factors. For example, when a fluorescent substance is present in a depth direction of a measurement portion upon irradiating an excitation light onto a sample for analysis, fluorescence is emitted in the fluorescent substance itself since the excitation light reaches towards the depth direction. Therefore, fluorescence and Raman scattering light overlap, and, frequently, a highly accurate analysis cannot be performed. Analysis results are greatly influenced by such fluorescence since Raman scattering light is an extremely weak spectrum, as described above. An art for suppressing the incidence of fluorescence of fluorescent substances by introducing an induced emission light that can prevent fluorescence from the sample is disclosed in Patent Literature 1.

### PATENT LITERATURE

PATENT LITERATURE 1: Japanese Patent Publication No. 2013-15515
WO 2010 004 720 A1 discloses a confocal microspectroscope for spectrometry of a part or the whole of a sample includes a distributed liquid crystal rotator for generating an axisymmetrically polarized laser beam having a polarization distribution symmetrical with respect to the optical axis and an objective for focusing the axisymmetrically polarized laser beam on the sample. The objective focuses reflected and/or scattered light from the sample.
US 2009 323 058 A1 discloses a method for imaging at least one microscopic property of a sample and an apparatus with which the proposed method can be carried out. In the method, a coherent illumination light with a illumination wavelength is produced by means of a light source. The illumination light is imaged onto a region on or within the sampled. Detection light emitted by the sample is split into incoherent detection light and into coherent detection light by means of at least on physically separating beam splitter. The coherent detection light is separated from the coherent illumination light by a beam-splitter element. The coherent detection light is detected.
US 2015 015 878 A1 discloses a Raman spectrometry apparatus comprising a condensing unit that condenses a light flux emitted from a light source to a prescribed position in a sample; a retroreflective unit that is disposed opposite to the condensing unit with reference to the sample; and a detecting unit that detects scattering light released from the prescribed position in the sample. The retroreflective unit again condenses the light flux having transmitted through the sample to become incident on the retroreflective unit to the prescribed position, irrespective of any change in disposition of the retroreflective unit. The retroreflective unit has at least one corner cube prism.
WO 2016 135 177 A1 discloses a device for detecting light for use in a microscope, with at least one silicon photomultiplier and an optical system, the SiPM being one of an array or a plurality of single-photon avalanche diodes formed detection area and wherein the optics forms the light in such a way that the detection area with a Light beam area of almost constant intensity is completely covered as possible.
Further state of the art is disclosed in CORMACK I ET AL, "Fluorescence suppression within Raman spectroscopy using annular beam excitation", APPLIED PHYSICS LETTERS, A I P PUBLISHING LLC, US, (20070712), vol. 91, no. 2, doi:10.1063/1.2756311, ISSN 0003-6951, pages 23903 - 23903.

### DISCLOSURE OF THE INVENTION

### PROBLEM TO BE SOLVED BY THE INVENTION

However, although fluorescence emitted from the sample can be suppressed by introducing the induced emission light like the method described above, the analysis device (Raman microscope) becomes larger or more complicated since the number of configuration equipment of the analysis device increases. Further, although the incidence of fluorescence can be suppressed only by introducing the induced emission light, there is still a space for more improvements for performing analysis with high accuracy.

The present invention has been accomplished in view of conventional arts, and an object of the present invention is to provide a confocal Raman microscope that can detect good Raman light for a high accuracy analysis.

### MEANS TO SOLVE THE PROBLEM

According to the present invention the above object is achieved by means of a confocal Raman microscope according to independent claims 1 and 2. The dependent claim 3 is directed to a different advantageous aspect of the invention.

### EFFECT OF THE INVENTION

According to the confocal Raman microscope of the present invention, spatial resolution in the vertical direction is increased and fluorescence from the vertical direction of the sample is reduced by shaping the cross section of the excitation light into an approximate annular shape when irradiating the excitation light by devising the shape of the cross section of the irradiation light. Moreover, the confocal Raman microscope can eliminate the part of the light of which a large amount lights that are unnecessary for analysis are mixed among the focused light by providing a diaphragm having an inverted shape of the mask at irradiation of the excitation light in the focusing process and shielding the light at the outer part of the cross section among the light that passed the confocal aperture. As a result, analysis with high accuracy would be possible.

Further, analysis with high accuracy would be possible by reducing the cross section of the excitation light and irradiating the excitation light having strong vertical component onto the sample so that the intensity of Raman scattering light is increased. Further analysis with high accuracy would be possible by shielding fluorescence and the like in the vertical direction from the sample in the focusing process.

In addition, horizontal spatial resolution was improved at a microscopic measurement when a dark field illumination was used to the excitation light.

### BRIEF DESCRIPTION OF THE DRAWINGS

Fig. 1 depicts a schematic configuration view of a first embodiment of the confocal Raman microscope according to the present invention.
Fig. 2 depicts a schematic illustrative view of cutting vertical components of the excitation light.
Fig. 3 depicts an observation image at a focus surface with/without the mask of the excitation light.
Fig. 4 shows measurement results of Z resolution when an aperture having an opening of 10 µm is used.
Fig. 5 shows measurement results of Z resolution when an aperture having an opening of 17 µm is used.
Fig. 6 shows measurement results of Z resolution when an aperture having an opening of 34 µm is used.
Fig. 7 shows measurement results of Z resolution when an aperture having an opening of 100 µm is used.
Fig. 8 shows measurement results of Z resolution of a ruby when an aperture having an opening of 10 µm is used.
Fig. 9 shows measurement results of Z resolution of a ruby when an aperture having an opening of 17 µm is used.
Fig. 10 shows measurement results of Z resolution of a ruby when an aperture having an opening of 34 µm is used.
Fig. 11 shows measurement results of Z resolution of a ruby when an aperture having an opening of 100 µm is used.
Fig. 12 shows optical observations of Rayleigh light with/without a mask.
Fig. 13 depicts a schematic view of light intensity distributions at lens focuses.
Fig. 14 shows optical observation images of beam spots on the sample surfaces.
Fig. 15 shows a range that a pin hole captures on the sample surface.
Fig. 16 depicts a schematic view of an evaluation of horizontal resolution when a Ronchi plate made of chromium and glass is used.
Fig. 17 shows measurement results of horizontal resolution when an aperture having an opening of 34 µm is used.
Fig. 18 shows measurement results of horizontal resolution when an aperture having an opening of 10 µm is used.
Fig. 19 depicts a schematic configuration view of a second embodiment of the confocal Raman microscope according to the present invention.
Fig. 20 depicts a schematic configuration view of a third embodiment of the confocal Raman microscope which is not covered by the subject-matter of the present claims.
Fig. 21 depicts a schematic configuration view of a fourth embodiment of the confocal Raman microscope which is not covered by the subject-matter of the present claims.

### BEST MODE FOR CARRYING OUT THE INVENTION

Hereinbelow, the confocal Raman microscope of the present invention is described with the drawings.

### <The first embodiment>

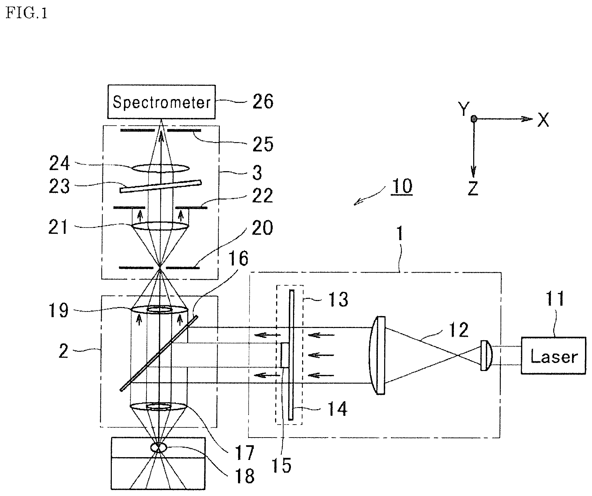

Fig. 1 shows a schematic view of a confocal Raman microscope according to the first embodiment of the present invention. The confocal Raman microscope 10 in Fig. 1 comprises: a light source 11 that emits an excitation light; an excitation optical system 1 that guides the excitation light to an objective lens system 2; the objective lens system 2 that irradiates the excitation light onto a predetermined position of a sample 18 and focuses Raman scattering light; and a focusing optical system 3 that guides Raman scattering light that is focused by the objective lens system 2 to a spectrometer 26.

A characteristic point in the present embodiment is that it comprises an excitation light shaping means that shapes the cross section of the excitation light into an approximate annular (approximate ring) shape. Therefore, the present embodiment comprises a mask 13 behind a beam expander 12 of the excitation optical system 1. Further, the focusing optical system 3 comprises a diaphragm 22 having an inverted shape of the mask 13.

First of all, the excitation optical system 1 and an irradiation process of the excitation light are described.

The excitation optical system 1 comprises the beam expander 12 and the mask 13. The cross section of the excitation light that is emitted from the light source 11 is adjusted (expanded) to a suitable width by the beam expander 12. The excitation light having an expanded cross section reaches the mask 13. The mask 13 is consisted of a glass member 14 that can transmit the excitation light and a shielding member 15 for shielding the excitation light. The glass member 14 has an approximate square or approximate annular shape and can be of any shape as long as it can transmit the excitation light. The shielding member 15 has an approximate annular shape. Further, for example, the material of the shielding member 15 is an aluminum foil and the like and can be of any material as long as it can shield the excitation light. The shielding member 15 is arranged approximately at the central part of the mask 13 and can shield only the approximate central part of the cross section of the excitation light. The excitation light of which its cross section is expanded passes through the mask 13, so that only the approximate central part of the cross section of the excitation light is shielded and the cross section of the excitation light becomes an approximate annular shape. The excitation light having this approximate annular cross section is reflected to a direction of the sample 18 (downwards direction) by a beam splitter 16 of the objective lens system 2 and irradiated through an objective lens 17 onto the sample 18 as a beam spot.

The excitation light of which the approximate central part of its cross section is shielded is in an approximate annular shape having a hole at the center until it is reflected towards the sample 18 by the beam splitter 16. However, it is irradiated as a beam spot having an approximate circular cross section when it is irradiated onto the sample 18 by the objective lens 17. Consequently, the light intensity in the vertical direction of the light irradiated onto the sample 18 from the central part of the approximate annular cross section of the excitation light is reduced. As a result, the excitation light is not irradiated directly into the vertical direction of the sample 18 like in general dark field illumination.

Therefore, spatial resolution in the vertical direction of the sample 18 can be increased by using an excitation light irradiation method by the approximate annular shaped excitation light (dark filed illumination), and fluorescence will not emitted and thus good Raman scattering light can be obtained when fluorescence substances are present in a depth direction (vertical direction) of the analysis portion of the sample 18.

Next, the objective lens system 2 is described in detail.

The objective lens system 2 comprises: the beam splitter 16 that reflects the excitation light towards the sample 18; an objective lens 17 that irradiates the excitation light onto a predetermined position of the sample 18; and an imaging lens 19 for imaging the focused light.

As described above, the excitation light having a cross section of an approximate annular shape in the excitation optical system is reflected to a direction (downwards) to the sample 18 by the beam splitter 16 and is irradiated through the objective lens 17 onto the sample 18 as a beam spot. A light having a wavelength different from the excitation light (Raman scattering light) is scattered by the excitation light that is irradiated onto the sample 18. Then, Raman scattering light is captured by the objective lens 17, passes through the beam splitter 16 and the imaging lens 19 and proceeds to a direction to be focused (the upward direction towards the spectrometer 26).

Next, the focusing optical system 3 and focusing process are described in detail.

The focusing optical system 3 comprises: a confocal aperture 20 that is provided at an imaging point of Raman scattering light; a parallel lens 21 for making the light that passes through the confocal aperture 20 into a parallel light; a diaphragm 22 for preventing the entry of the part of the light of which many unnecessary lights for analysis are mixed among the focused light; a filter 23 that eliminates specific lights; a focusing lens 24 for focusing the parallel light to the spectrometer 26; and an incident slit 25 that adjusts the quantity of the light that enters the spectrometer 26. Among Raman scattering light of which its direction is determined by the objective lens system 2, only the light that is in focus is effectively focused by the confocal aperture 20 that is provided at a position that Raman scattering light is imaged (imaging point).

Therefore, fluorescence and Rayleigh light that are emitted from positions other than the focal position are completely eliminated by providing the confocal aperture 20. In addition, although Rayleigh light may be emitted from the focal position, its light intensity in the vertical direction from the focal position becomes significantly small because of its characteristic. Consequently, good Raman scattering light can be obtained from the focal position.

Here, the light that is in focus is effectively focused by the confocal aperture 20. However, as described above, Raman scattering light and the light that is unnecessary for analysis are mixed in the focused light (the light in focus). As Raman scattering light is an extremely weak scattering light, it is essential to reduce the light that is unnecessary for analysis among the focused light as little as possible in order to perform an analysis with high accuracy. However, it is extremely difficult to separate Raman scattering light and the light that is unnecessary for analysis from the focused light by the confocal aperture 20.

Further, many lights that are unnecessary for analysis are often mixed in the outer part of the cross section of the light among the light that passed the confocal aperture. Hence, only the light at the approximate central part of the cross section passes through the diaphragm 22 among the light that passed the confocal aperture 20, and the light in the outer part of the cross section where many lights unnecessary for analysis are cut. As a result, only the light at the approximate central part of the cross section where the ratio of Raman scattering light is high is focused.

Specifically, the diaphragm 22 has a cross section that is in an inverted shape of the mask 13. When the mask 13 is as shown in the present embodiment (Fig.1), the diaphragm 22 has a cross section having a hole at the central part. As it will be described in detail below, the part of the light that many lights unnecessary for analysis, such as Rayleigh light, are mixed (the light at the outer part of the cross section) can be cut precisely by using the diaphragm 22 having a cross section in an inverted shape of the mask 13. Further, it is preferable that the hole size of the diaphragm 22 is adjustable according to the light desired to be entered (or the light unnecessary for analysis, such as Rayleigh light, that is desired to be eliminated).

The filter 23 may be provided in the upper direction of the diaphragm 22 (the direction to the spectrometer 26) to cut the light unnecessary for analysis in a constant frequency region. However, the filter 23 plays an auxiliary role at cutting the light unnecessary for analysis. Further, in Fig. 1, although the filter 23 is arranged in the upper direction of the diaphragm 22, it may be arranged in the lower direction of the diaphragm 22 (in the sample side). In addition, the cutting rate of the filter 23 can be lowered by providing the diaphragm 22 which leads to lower the cost of the analysis device, as a result.

As described above, a good Raman scattering light can be obtained by the focusing process comprising: effectively focusing the light at the imaging point by the confocal aperture 20, and cutting of the part of the light that many lights unnecessary for analysis are mixed among the light focused by the diaphragm 22 via the filter 23. Such good Raman scattering light becomes a light that can pass through the incident slit 25 by the focusing lens 24 and enters the spectrometer 26 via the incident 25. Hence, an analysis with high accuracy can be performed by the good Raman scattering light.

### <Suppression of fluorescence emission by pseudo dark field illumination>

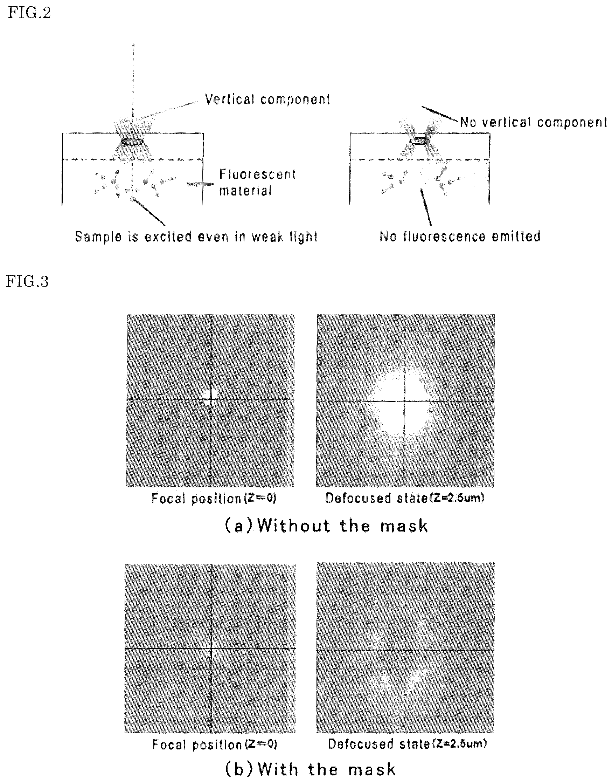

As described above, fluorescence emitted from analysis samples and substrates becomes a big problem in analysis by Raman scattering light. For example, as shown in the left side of Fig. 2, Raman scattering light is buried by fluorescence emitted from the substrate or the sample when the sample is placed on the substrate having fluorescence. Such fluorescence is significantly stronger than Raman scattering light. Consequently, fluorescence excited by the diffused excitation light that is away from the focusing surface could not be ignored in conventional analysis by Raman scattering light. Further, in general, confocal microscopes can effectively detect only the light at the focusing surface. However, it is difficult to eliminate light components that proceed in the vertical direction towards the sample. Hence, the present inventors found that the light of vertical components can be eliminated by shielding the excitation light by arranging the mask at the central part of the cross section of the excitation light and shaping the excitation light into an approximate annular shape (refer to the right side of Fig. 2).

Here, an experiment was performed by positioning the mask 13 at the center of the parallel light flux. The observation images at the focusing surface with/without the mask 13 are shown in Fig. 3. As shown in Fig. 3 (a), it can be seen that the circular cross section is maintained in a defocused state without the mask 13. On the other hand, in Fig. 3 (b), the excitation light is focused at one point when it is focused on the focusing surface. However, the light at the central part disappears when the height is shifted (defocused). Consequently, the excitation light would not be buried in the vertical direction.

### <Z resolution evaluation>

Next, Raman measurement was performed to Si substrates while changing the height as Z resolution evaluation, and Z resolution was calculated from a full width at half maximum of Si peak. Z resolution at each aperture 20 having different pin hole sizes are shown in Table 1. The bigger the pin hole size is, the more improvement in resolution can be seen when the mask 13 is inserted.

**[Table 1] Differences of Z resolution of Si with/without the mask**

| Pin hole size | Z resolution full width at half maximum | | |
|---|---|---|---|
| | Without the mask | With the mask | Corresponding drawing |
| Φ10 µm | 0.95 µm | 0.95 µm | Fig. 4 |
| Φ17 µm | 1.25 µm | 1.15 µm | Fig. 5 |
| Φ34 µm | 2.10 µm | 1.70 µm | Fig. 6 |
| Φ100 µm | 3.80 µm | 2.80 µm | Fig. 7 |

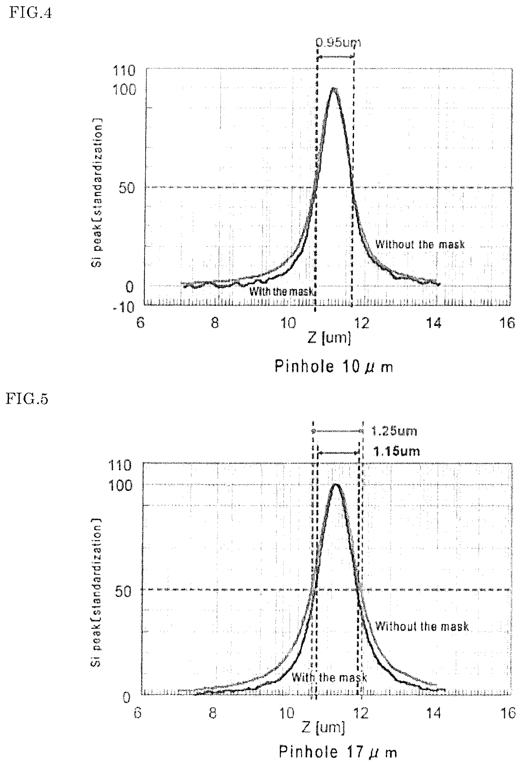

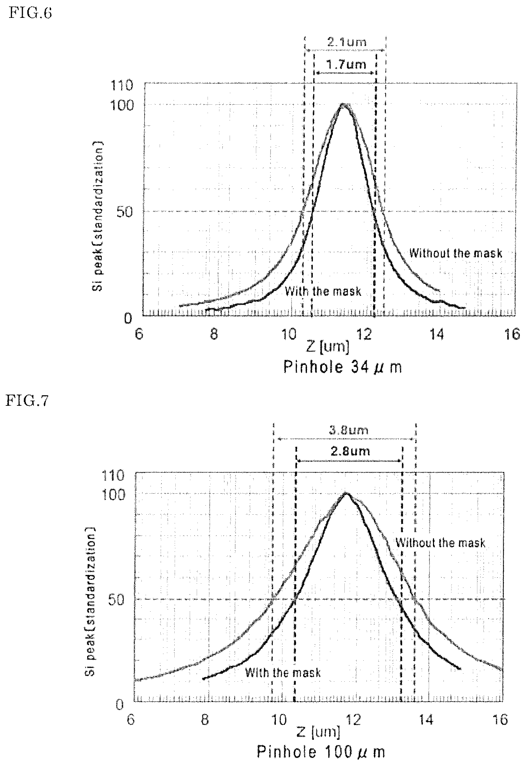

Measurement results of Z resolution of Si at each aperture 20 are shown in Fig. 4 to 7. When the pin hole size is smaller, the resolution at 50% width are similar. However, there is a big difference at 10% level. This means that the excitation light did not reach the depth direction of the sample 18 by insertion of the mask 13.

Next, Raman measurement was performed to a ruby that is transparent and has fluorescence while changing the height as Z resolution evaluation, and Z resolution was calculated from 10% to 90% width. Z resolution at each aperture 20 having different pin hole sizes are shown in Table 2. Similar to Si, the bigger the pin hole is, the more improvement in resolution can be seen when the mask 13 is inserted.

**[Table 2] Differences of Z resolution of Ruby with/without the mask**

| Pin hole size | Z resolution 10% to 90% | | |
|---|---|---|---|
| | Without the mask | With the mask | Corresponding drawing |
| Φ10 µm | 4.6 µm | 4.1 µm | Fig. 8 |
| Φ17 µm | 4.9 µm | 4.1 µm | Fig. 9 |
| Φ34 µm | 5.1 µm | 4.2 µm | Fig. 10 |
| Φ100 µm | 12.0 µm | 7.0 µm | Fig. 11 |

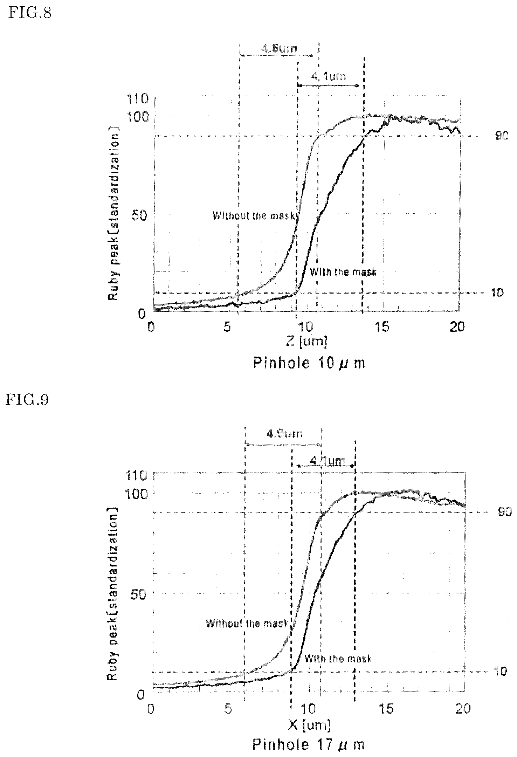

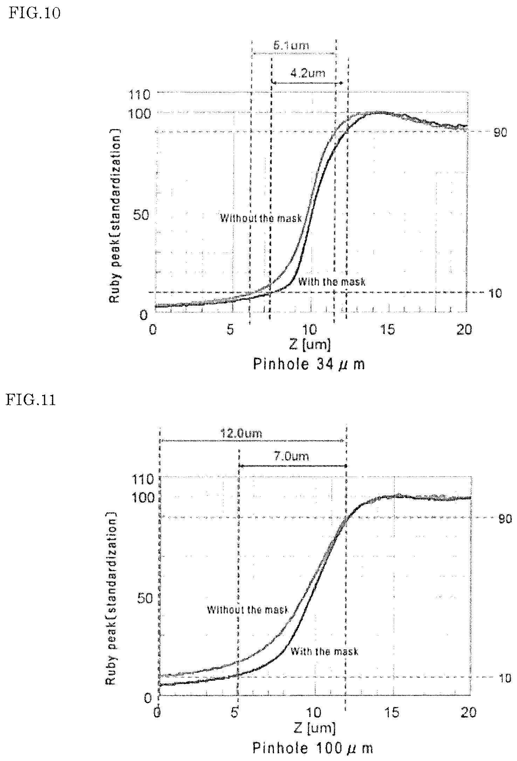

Measurement results of Z resolution of rubies at each aperture 20 are shown in Fig. 8 to 11. Similar to Si, resolution improves when the pin hole size is bigger. Further, improvement in Z resolution is larger in a transparent material that laser gets under compared to an opaque material such as Si.

### <Cutting Rayleigh light and the like that are mixed in Raman scattering light>

The mask 13 is inserted at the central part of the cross section to the parallel light flux at the excitation light incidence side (excitation light irradiation process), and the diaphragm 22 having an inverted shape of the mask 13 is placed in the detection optical path (focusing process). Rayleigh light can be cut by using this method, and thus an optical system like the dark field illumination will be possible. Although Raman scattering light from the sample 18 becomes smaller as the masked region becomes smaller, detection sensitivity can be improved since Rayleigh light and the like can be effectively eliminated.

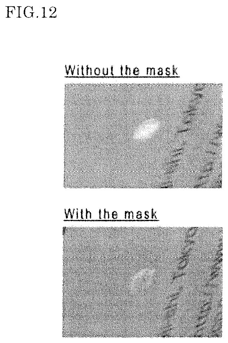

The state of the parallel light flux that comes back was confirmed by changing the sample 18 to a mirror and placing a paper in the detection optical path (Fig. 12). The central part of the excitation light at the detection side was missing when the mask 13 was placed at the incidence side (refer to the bottom image in Fig. 12). That is, Rayleigh light and the like can be cut by placing the diaphragm 22 that lets only the central part pass through in the focusing process.

### <Improvement of horizontal spatial resolution>

Here, improvement of horizontal spatial resolution of the excitation light is described. As described above, the shape of the beam spot on the sample surface can be changed by placing the mask 13 at the central part of the cross section of the excitation light. Therefore, horizontal spatial resolution can be improved by fixing the conditions of the excitation light irradiation means.

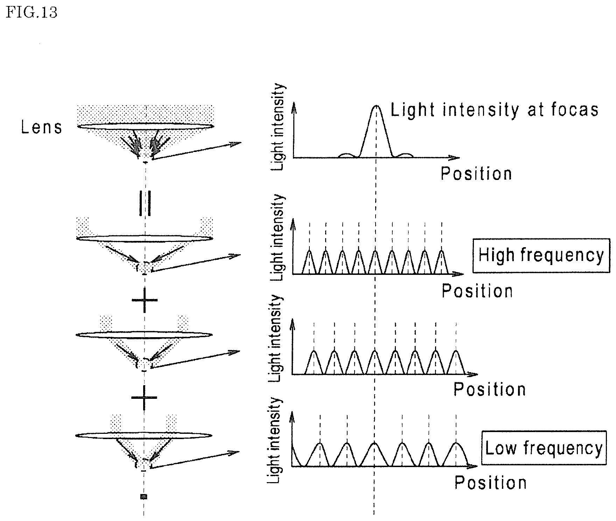

First of all, the light intensity at the focusing point of the lens is described. As shown in Fig. 13, the light is focused onto the focus from various angles at the focusing point of the lens. At the central position of the focus, significantly strong light intensity can be obtained since the phase of each light matches. Lights that are incident onto the focus are considered by angles. When two lights that passed the outer part of the lens cross at the focus, interference fringes of the light are formed. The interval of the interference fringes is determined by the wavelength and angle of the light. The interference fringes formed by the light that passes through the outer part of the lens have a narrow interval. The interval gets wider as the light passes inner side.

Like the present invention, elimination of the inner side light by shielding with the mask 13 means that interference fringes having a wide interval are eliminated (refer to Fig. 13). Although the light intensity at the central part is deteriorated, the beam size at the central part can be made smaller since only the interference fringes having a narrow interval are overlapped.

The finest interval of the interference fringes is the half of the wavelength. Therefore, 266 nm is the limit for a laser wavelength of 532 nm, for example.

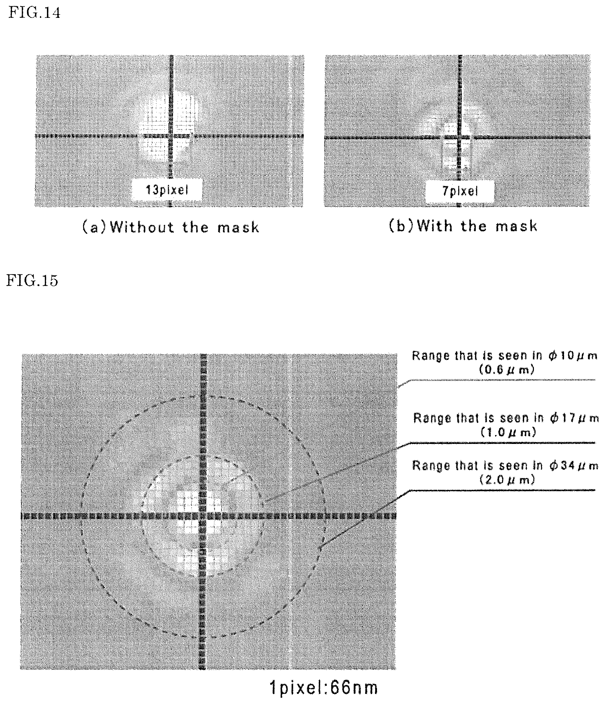

Optical observation images of the beam spots on the sample surface are shown in Fig. 14. The light intensity at the central part is strong without the mask. On the other hand, the light intensity at the central part is weak with the mask, and it can be seen that the beam spot is small.

Horizontal spatial resolution can be improved by devising the optical system so that only the small beam spot at the central part is captured.

A range that the aperture 20 captures on the sample surface is shown in Fig. 15. A double beam is formed on the sample surface. The ring shaped beam at the outer part is captured when the aperture 20 having Φ17 µm is used. The central part is largely captured when the aperture 20 having Φ10 µm is used.

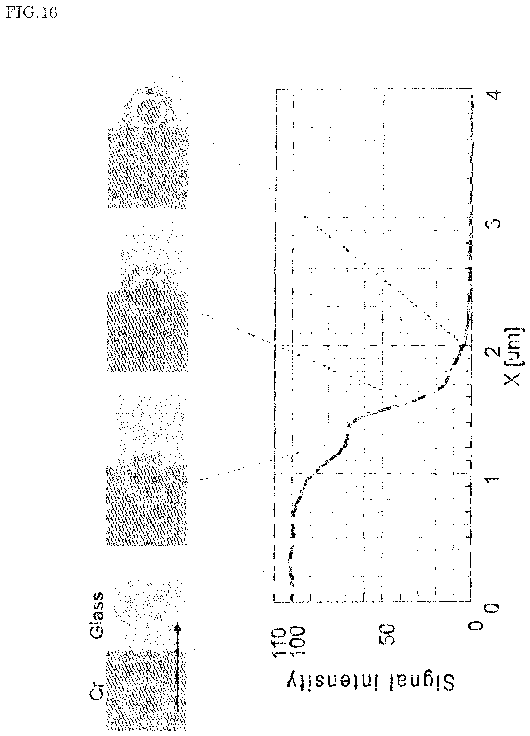

The sample 18 is changed to a Ronchi plate, and horizontal spatial resolution is evaluated from Rayleigh light. As shown in Fig. 16, the light intensity is measured by using the Ronchi plate consisted of chromium and glass and moving the position of Rayleigh light in the horizontal direction. Further, in the present evaluation, the position of Rayleigh light is moved in the horizontal direction, but similar evaluation can be obtained when the Ronchi plate is moved in the horizontal direction.

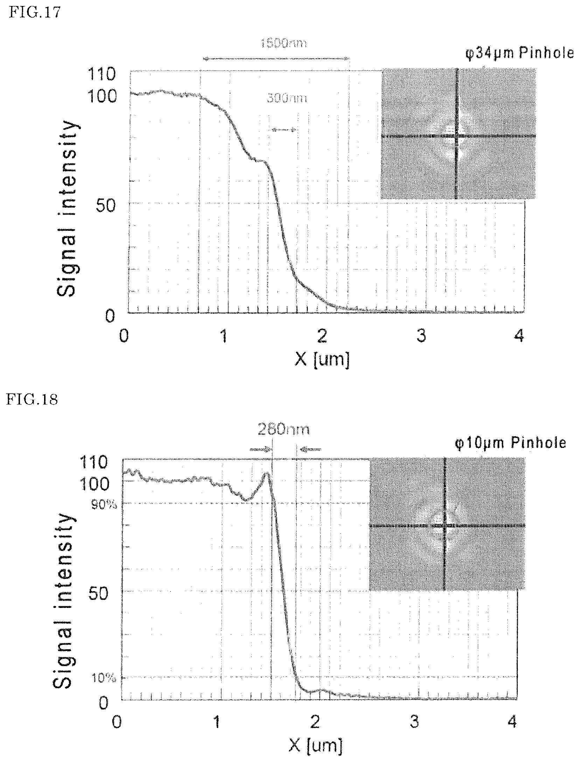

Measurement results of X resolution when an aperture having an opening of 34 µm is used are shown in Fig. 17. Further, measurement results of X resolution when an aperture having an opening of 10 µm is used are shown in Fig. 18. Two resolutions are obtained when the aperture is 34 µm. This is because the ring shaped beam at the outer part and the beam shape of the central part are reflected to the results. High spatial resolution can be obtained when the aperture is 10 µm because the beam at the central part is captured and the ring shaped beam at the outer part is eliminated.

### <The second embodiment>

Next, a confocal Raman microscope according to the second embodiment of the present invention is described with the drawings. Configurations that are in common with the confocal Raman microscope 10 of Fig. 1 are indicated with reference numbers that 100 are added to those of Fig. 1.

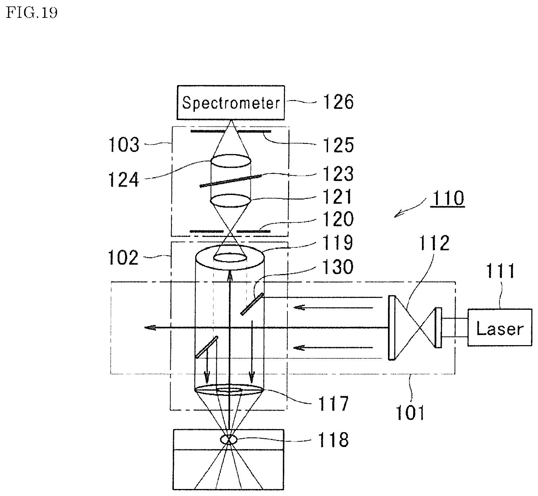

A schematic view of a confocal Raman microscope according to the second embodiment of the present invention is shown in Fig. 19. The confocal Raman microscope 110 shown in Fig 19 comprises: a light source 111 that emits an excitation light; an excitation optical system 101 that guides the excitation light to an objective lens system 102; the objective lens system 102 that focuses Raman scattering light; and a focusing optical system 103 that guides Raman scattering light that is focused by the objective lens system 102 to a spectrometer 126.

The characteristic point of the present embodiment is that it comprises an excitation light shaping means that shapes the cross section of the excitation light into an approximate annular shape like the first embodiment. Therefore, the present embodiment comprises an aperture mirror 130 behind a beam expander 112 of the excitation optical system 101. Further, the aperture mirror 130 simultaneously plays roles for the beam splitter 16 and diaphragm 22 of the first embodiment.

First of all, the excitation optical system 101 and an irradiation process of the excitation light are described.

The cross section of the excitation light irradiated from the light source 111 is adjusted (expanded) to a suitable width by the beam expander 112, and the excitation light having an expanded cross section reaches the aperture mirror 130. The aperture mirror 130 has an approximate annular shape and has an opening in the central part. Consequently, the central part of the cross section of the excitation light is not reflected towards the sample 118 by the aperture mirror 130 and passes through the opening. The excitation light at the outer part of the cross section is reflected by the aperture mirror 130 and is guided towards the sample 118 (downwards direction). That is, only the excitation light at the outer part of the cross section of the excitation light is guided towards the sample, and thus the cross section of the excitation light becomes an approximate annular shape like the first embodiment. Then, the excitation light having an approximate annular shaped cross section is irradiated onto the sample 118 via the objective lens 117 of the objective lens system 102 as a beam spot.

Next, the objective lens system 102 is described in detail.

The objective lens system 102 comprises: the aperture mirror 130 that reflects the excitation light to the direction of the sample 118; the objective lens 117 that irradiates the excitation light to a predetermined position of the sample 118 and focuses Raman scattering light; and an imaging lens 119 for imaging the focused light.

As described above, the excitation light having an approximate annular shaped cross section formed by the aperture mirror 130 is reflected towards the sample and is irradiated onto the sample 118 via the objective lens 117 as a beam spot. A light having a wavelength that is different from the excitation light (Raman scattering light) is formed by the excitation light reflected by the sample 118. Then, Raman scattering light is captured by the objective lens 117.

Here, the aperture mirror 130 plays a role for the diaphragm 22 of the first embodiment. The aperture mirror 130 cuts the part of the light in which many lights that are unnecessary for analysis are mixed (the light at the outer part of the cross section) among the light that passed the objective lens 117, and only the light that many Raman scattering light are mixed is focused from the central part of the aperture mirror. The light that passed the central part of the aperture mirror 130 passes through the imaging lens 119 and proceeds to the direction to be focused (upper direction that the spectrometer 126 is arranged).

In the second embodiment, the aperture mirror 130 can have the functions of the beam splitter 16 and the diaphragm 22 for guiding the excitation light towards the sample. Thus, the confocal Raman microscope can be smaller and simpler.

Next, the focusing optical system 103 and a focusing process are described in detail.

The focusing optical system 103 comprises: a confocal aperture 120 provided at the imaging point of Raman scattering light; a parallel lens 121 for making the light that passes through the confocal aperture 120 into a parallel light; a filter 123 that eliminates specific lights; a focusing lens 124 for focusing the parallel light to the spectrometer 126; and an incident slit 125 that adjusts the quantity of the light that enters the spectrometer 126. Among Raman scattering light of which its direction is determined by the objective lens system 102, only the light that is in focus is effectively focused by the confocal aperture 120 that is provided at a position that Raman scattering light is imaged (imaging point). That is, fluorescence and Rayleigh light from the position other than the focal position can be completely eliminated by providing the confocal aperture 120. In addition, although Rayleigh light and the like may be emitted from the focal position, its light intensity from the focal position to the vertical direction becomes significantly small because of its characteristic. Consequently, a good Raman scattering light can be obtained.

Further, the filter 123 can be provided in the focusing optical system 103 to cut the light unnecessary for analysis in a constant frequency region. However, the filter 123 plays an auxiliary role for eliminating lights that are unnecessary for analysis. As described above, the cutting rate of the filter 123 can be lowered by providing the aperture mirror 130, and thus the cost of the analysis device can be lowered as a result.

A good Raman scattering light can be obtained by the focusing process comprising: cutting the part of the light that many lights unnecessary for analysis are mixed by the aperture mirror 130; and effectively focusing the light at the imaging point by the confocal aperture 120 via the filter 123. This good Raman scattering light becomes a light that can pass through the incident slit 125 by the focusing lens 124 and enters into the spectrometer 126. Hence, an analysis with high accuracy can be performed by the good Raman scattering light.

### <The third embodiment>

Next, a confocal Raman microscope according to the third embodiment - which is not covered by the subject-matter of the present claims - is described with the drawings. Configurations that are in common with the confocal Raman microscope 10 of Fig. 1 are indicated with reference numbers that 200 are added to those of Fig. 1.

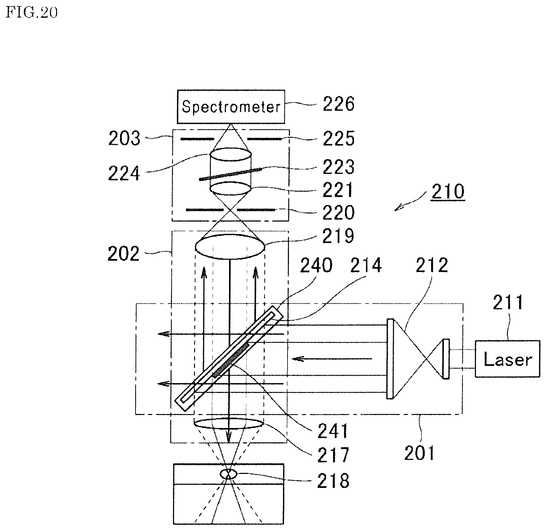

Fig. 20 shows a schematic view of the confocal Raman microscope according to the third embodiment - which is not covered by the subject-matter of the present claims. The confocal Raman microscope 210 shown in Fig. 20 comprises: a light source 211 that emits an excitation light; an excitation optical system 201 that guides the excitation light into an objective lens system 202; the objective lens system 202 that focuses the excitation light to a predetermined position of the sample 18 and focuses Raman scattering light; and a focusing optical system 203 that guides Raman scattering light that is focused by the objective lens system to a spectrometer 226.

The characteristic point of the present embodiment is that it comprises an excitation light shaping means for reducing the cross section of the excitation light. Therefore, the present embodiment comprises a center blocking mirror 240 behind a beam expander 212 of the excitation optical system 201. Further, the center blocking mirror 240_plays a role for the mask 13 of the first embodiment and a role for the beam splitter 16 of the first embodiment for guiding the excitation light to the sample 18.

First of all, the excitation optical system 201 and an irradiation process of the excitation light are described.

The cross section of the excitation light irradiated from the light source 211 is adjusted (expanded) to a suitable width by the beam expander 212, and the excitation light having an expanded cross section reaches the center blocking mirror 240. The center blocking mirror 240 is consisted of a glass member 214 and a reflecting mirror 241 that is positioned at an approximate central part of the cross section of the glass member 214. The glass member 214 is a square or circular shaped and can be of any shape as long as the excitation light can be transmitted. The reflecting mirror 241 is an approximate annular shaped.

The excitation light is guided towards the sample 218 by a reflection at the center blocking mirror 240. Among the excitation light, only the excitation light at the approximate central part of the cross section is reflected towards the sample 218 (downward direction) by the reflecting mirror 241, and the excitation light at the outer part of the cross section is not reflected towards the sample 218 and passes through the glass member 214. The excitation light that is reflected towards the sample 218 by the center blocking mirror 240 is irradiated onto the sample 218 via an objective lens 217 as a beam spot.

Next, the objective lens system 202 is described in detail.

In the present embodiment, the excitation light is irradiated in a vertical direction of the sample 218, and thus a large amount of fluorescence may be emitted from the sample 218 together with Raman scattering light. As described above, Raman scattering light is a very weak light, such that analysis with high accuracy may be prevented by fluorescence from the sample 218. Therefore, in the focusing process of the present embodiment, all of the fluorescence in the vertical direction is shielded by the reflecting mirror 241 of the center blocking mirror 240 in the first step of focusing, as shown in Fig. 20. Consequently, good Raman scattering light can be focused via the cross section of the outer part of the central part of the center blocking mirror 240 (the cross section of the outer part of the reflecting mirror 241).

Raman scattering light having a wavelength different from the excitation light is scattered by the excitation light that is irradiated onto the sample 218. Raman scattering light is captured by the objective lens 217, and fluorescence in the vertical direction is shielded by the center blocking mirror 240. Then, Raman scattering light passes through the glass member 214 of the closed mirror and an imaging lens 219 and proceeds to the direction to be focused (upward direction).

Next, the focusing optical system 203 and a focusing process are described in detail.

The focusing optical system 203 comprises: a confocal aperture 220 that is provided at the imaging position of Raman scattering light; a parallel lens 221 for making the light that passes through the confocal aperture 220 into a parallel light; a filter 223 that eliminates specific lights; a focusing lens 224 for focusing the parallel light into the spectrometer 226; and an incident slit 225 that adjusts the quantity of the light entering into the spectrometer 226.

Among Raman scattering light of which its direction is determined, only the light that is in focus is effectively focused by the confocal aperture 220 that is provided at a position that Raman scattering light is imaged (imaging point). The light focused by the confocal aperture 220 can be made into a parallel light, and the light unnecessary for analysis in a constant frequency region can be cut by a filter 223. However, the filter 223 plays an auxiliary role for eliminating the light unnecessary for analysis.

Good Raman scattering light can be obtained by the focusing process comprising: shielding fluorescence from the sample 218 in the vertical direction by the reflecting mirror 241 of the center blocking mirror 240; and effectively focusing the light at the imaging point by the confocal aperture 220 via the filter 223. This good Raman scattering light becomes a light that can pass through the incident slit 225 by the focusing lens 224 and enters the spectrometer 226 via the incident slit 225. Hence, an analysis with high accuracy can be performed by the good Raman scattering light.

In the third embodiment, a strong excitation light is irradiated in the vertical direction, assuming that fluorescence is emitted from the sample 218 as a premise. As a result, although strong fluorescence is emitted from the vertical component, the fluorescence is completely shielded by the center blocking mirror 240. And thus, a good Raman scattering light can be detected and analysis with high accuracy can be performed.

### <The fourth embodiment>

Next, a confocal Raman microscope according to the fourth embodiment - which is not covered by the subject-matter of the present claims - is described with the drawings. Configurations that are in common with the confocal Raman microscope 10 of Fig. 1 are indicated with reference numbers that 300 are added to those of Fig. 1.

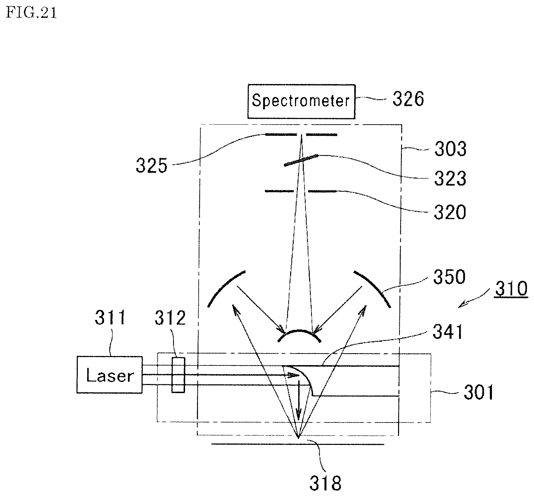

Fig. 21 shows a schematic view of the confocal Raman microscope according to the fourth embodiment - which is not covered by the subject-matter of the present claims. The confocal Raman microscope 310 comprises: a light source 311 that emits an excitation light; an excitation optical system 301 that guides the excitation light to a sample 318; and a focusing optical system 303 that focuses and guides Raman scattering light to a spectrometer 326.

The characteristic point of the present embodiment is that it comprises a reflecting mirror 341 for guiding the excitation light to the sample 318 and that the reflecting mirror 341 plays a role of the mask 13 of the first embodiment simultaneously. The present embodiment does not comprise an objective lens system. Raman scattering light that is scattered from the sample 318 is focused directly by the focusing optical system 303 having a Cassegrain mirror 350 and is guided to the spectrometer 326.

First of all, the excitation optical system 301 and an irradiation process of the excitation light are described.

The excitation optical system 301 comprises a beam expander 312 and a reflecting mirror 341. The cross section of the excitation light that is irradiated by the light source 311 is adjusted to a suitable width, and the excitation light having an adjusted cross section reaches the reflection mirror 341. The reflection mirror 341 is a mirror having a curved surface of a concave shape and can reflect the excitation light in a vertical direction relative to the proceeding direction of the excitation light (the direction towards the sample 318 in Fig. 13). The excitation light of which its cross section is adjusted is guided to the downward direction by the reflecting mirror 341 and is irradiated onto the sample 318 as a beam spot.

Next, the focusing system 303 and a focusing process are described in detail.

The focusing optical system 303 comprises: the reflecting mirror 341 that guides the excitation light towards the sample 318; the Cassegrain mirror 350 for focusing Raman scattering light; the confocal aperture 320 that is provided at the imaging position of Raman scattering light; a filter 323 that eliminates specific lights; and an incident slit 325 that adjusts the quantity of the light that enters the spectrometer 326.

In the present embodiment, a large amount of fluorescence may be emitted together with Raman scattering light from the sample 318 since the excitation light is irradiated into the vertical direction of the sample 318, like in the third embodiment. Consequently, as shown in Fig. 21, all of the fluorescence in the vertical direction is shielded by the reflecting mirror 341 in the first step of the focusing process of the present embodiment. Good Raman scattering light can be obtained by such shielding of fluorescence. Further, the Cassegrain mirror 350 is used for focusing. By using the Cassegrain mirror 350, the objective lens is not necessary and the distance to the imaging point can be shortened when the focal distance is long. Therefore, the microscope can be smaller.

Raman scattering light having a wavelength different from the excitation light is formed by the excitation light that is irradiated onto the sample 318. Fluorescence in the vertical direction is shielded by the reflecting mirror 341, and Raman scattering light is reflected to the direction to be focused (upward direction where the spectrometer is arranged) by the Cassegrain mirror 350. Among Raman scattering light of which its direction is determined, only the light that is in focus is effectively focused by the confocal aperture 320 that is provided at a position that Raman scattering light is imaged (imaging point). Then, Raman scattering light passes through the filter 323, and the part of the light that contains a large amount of light unnecessary for analysis that is mixed in Raman scattering light is eliminated. Therefore, good Raman scattering light can be obtained. The good Raman scattering light passes through the incident slit 325 and enters the spectrometer 326. Thus, analysis with high accuracy by good Raman scattering light can be performed.

As described above, the confocal Raman microscope according to the present invention increases spatial resolution in the vertical direction and reduces fluorescence from the vertical direction of the sample by making the cross section of the excitation light into an approximate annular shape. Further, the confocal Raman microscope according to the present invention focuses only the light that a large amount of Raman scattering light is mixed by providing the diaphragm having an inverted form of that of the mask at the irradiation of the excitation light in the focusing process and shielding the light at the outer part of the cross section among the light that passed the confocal aperture, and thus, analysis with high accuracy can be performed.

In addition, the horizontal spatial resolution was improved at the microscopic measurement when pseudo dark field was used to the excitation light.

### DESCRIPTION OF REFERENCE NUMBERS

1, 101, 201, 301 Excitation optical system
2, 102, 202 Objective lens system
3, 103, 203, 303 Focusing optical system
10, 110, 210, 310 Confocal Raman microscope
11, 111, 211, 311 Light source
12, 112, 212, 312 Beam expander
13 Mask
14, 214 Glass member
15 Shielding member
16 Beam splitter
17, 117, 217 Objective lens
18, 118, 218, 318 Sample
19, 119, 219 Imaging lens
20, 120, 220, 320 Confocal aperture
21, 121,221 Parallel lens
22, 122 Diaphragm
23, 123, 223, 323 Filter
24, 124, 224 Focusing lens
25, 125, 225, 325 Incident slit
26, 126, 226, 326 Spectrometer
130 Aperture mirror
240 Centre closed mirror
241, 341 Reflecting mirror
350 Cassegrain mirror

## Claims

1. A confocal Raman microscope comprising:
a light source (11) configured to emit an excitation light;
an excitation light irradiation means (1) configured to irradiate the excitation light onto a sample (18);
a focusing means (3) configured to focus Raman scattering light from a light scattered from the sample (18), the focusing means (3) comprising a focusing lens (24) and a confocal aperture (20); and
a detecting means (26) configured to detect the focused Raman scattering light,
wherein the excitation light irradiating means (1) comprises a beam expander (12) configured to expand a cross section of the excitation light and an excitation light shaping means (13) configured to shape a cross section of the expanded excitation light into an approximate annular shape,
**characterized in that**
the focusing means (3) comprises a shielding means (22) configured to pass the Raman scattering light of an approximate central part of the cross section among the Raman scattering light that passed the confocal aperture (20) and to shield the Raman scattering light of an outer part of the cross section; wherein
the excitation light shaping means (13) is a mask configured to shield an approximate central part of the cross section of the excitation light, and
the shielding means (22) is a diaphragm having a cross section that is an inverted shape of a cross section of the mask (13).

2. A confocal Raman microscope comprising:
a light source (111) configured to emit an excitation light;
an excitation light irradiating means (101) configured to irradiate the excitation light onto a sample (118);
a focusing means (103) configured to focus Raman scattering light from a light scattered from the sample (118), the focusing means (103) comprising a focusing lens (124) and a confocal aperture (120); and
a detecting means (126) configured to detect the focused Raman scattering light,
wherein the excitation light irradiating means (101) comprises a beam expander (112) configured to expand a cross section of the excitation light and an excitation light shaping means (130) configured to shape the cross section of the excitation light into an approximately annular shape,
**characterized in that**
the excitation light shaping means (130) is further configured to shield Raman scattered light heading to an outer part of the cross section of the excitation light shaping means (130).

3. The confocal Raman microscope according to claim 2, wherein the excitation light shaping means (130) is an aperture mirror of an approximate annular shape having a hole at its approximate central part, wherein the excitation light shaping means (130) is configured to reflect the light of the outer part of the cross section among the excitation light when irradiating the excitation light onto the sample (118) by reflecting the excitation light by the aperture mirror, and part of the Raman scattered light scattered from the sample (118), that is Raman scattered light to an approximate central part of the cross section of the aperture mirror, passes through the aperture mirror, and another part of the Raman scattered light scattered from the sample (118), that is Raman scattered light to the outer part of the cross section of the aperture mirror, is shielded by the aperture mirror.

## Patentansprüche

1. Konfokales Raman-Mikroskop, umfassend:
eine Lichtquelle (11), die konfiguriert ist, um ein Anregungslicht zu emittieren;
ein Anregungslicht-Bestrahlungsmittel (1), das konfiguriert ist, um das Anregungslicht auf eine Probe (18) zu strahlen;
ein Fokussiermittel (3), das konfiguriert ist, um Raman-Streulicht von einem von der Probe (18) gestreuten Licht zu fokussieren, wobei das Fokussiermittel (3) eine Fokussierlinse (24) und eine konfokale Apertur (20) umfasst; und
ein Detektionsmittel (26), das konfiguriert ist, um das fokussierte Raman-Streulicht zu detektieren,
wobei das Anregungslicht-Bestrahlungsmittel (1) einen Strahlaufweiter (12), der konfiguriert ist, um einen Querschnitt des Anregungslichts aufzuweiten, und ein Anregungslicht-Formungsmittel (13) umfasst, das konfiguriert ist, um einen Querschnitt des aufgeweiteten Anregungslichts in eine annähernd ringförmige Form zu formen,
**dadurch gekennzeichnet, dass**
das Fokussiermittel (3) ein Abschirmmittel (22) umfasst, das konfiguriert ist, um das Raman-Streulicht eines annähernd zentralen Teils des Querschnitts unter dem Raman-Streulicht, das die konfokale Apertur (20) passiert hat, durchzulassen und das Raman-Streulicht eines äußeren Teils des Querschnitts abzuschirmen; wobei
das Anregungslicht-Formungsmittel (13) eine Maske ist, die konfiguriert ist, um einen annähernd zentralen Teil des Querschnitts des Anregungslichts abzuschirmen, und
das Abschirmmittel (22) eine Blende mit einem Querschnitt ist, der eine invertierte Form eines Querschnitts der Maske (13) ist.

2. Konfokales Raman-Mikroskop, umfassend:
eine Lichtquelle (111), die konfiguriert ist, um ein Anregungslicht zu emittieren;
ein Anregungslicht-Bestrahlungsmittel (101), das konfiguriert ist, um das Anregungslicht auf eine Probe (118) zu strahlen;
ein Fokussiermittel (103), das konfiguriert ist, um Raman-Streulicht von einem von der Probe (118) gestreuten Licht zu fokussieren, wobei das Fokussiermittel (103) eine Fokussierlinse (124) und eine konfokale Apertur (120) umfasst; und
ein Detektionsmittel (126), das konfiguriert ist, um das fokussierte Raman-Streulicht zu detektieren,
wobei das Anregungslicht-Bestrahlungsmittel (101) einen Strahlaufweiter (112), der konfiguriert ist, um einen Querschnitt des Anregungslichts aufzuweiten, und ein Anregungslicht-Formungsmittel (130) umfasst, das konfiguriert ist, um den Querschnitt des Anregungslichts in eine annähernd ringförmige Form zu formen,
**dadurch gekennzeichnet, dass**
das Anregungslicht-Formungsmittel (130) ferner konfiguriert ist, um Raman-Streulicht abzuschirmen, das zu einem äußeren Teil des Querschnitts des Anregungslicht-Formungsmittels (130) gerichtet ist.

3. Das konfokale Raman-Mikroskop nach Anspruch 2, wobei das Anregungslicht-Formungsmittel (130) ein Aperturspiegel von annähernd ringförmiger Form ist, der ein Loch an seinem annähernd zentralen Teil aufweist, wobei das Anregungslicht-Formungsmittel (130) konfiguriert ist, um das Licht des äußeren Teils des Querschnitts unter dem Anregungslicht zu reflektieren, wenn das Anregungslicht auf die Probe (118) gestrahlt wird, indem das Anregungslicht durch den Aperturspiegel reflektiert wird, und ein Teil des von der Probe (118) gestreuten Raman-Streulichts, nämlich Raman-Streulicht zu einem annähernd zentralen Teil des Querschnitts des Aperturspiegels, durch den Aperturspiegel passiert, und ein anderer Teil des von der Probe (118) gestreuten Raman-Streulichts, d.h. Raman-Streulicht zu dem äußeren Teil des Querschnitts des Aperturspiegels, durch den Aperturspiegel abgeschirmt wird.

## Revendications

1. Microscope Raman confocal comprenant :
une source de lumière (11) configurée pour émettre une lumière d'excitation ;
un moyen d'irradiation de lumière d'excitation (1) configuré pour irradier la lumière d'excitation sur un échantillon (18) ;
un moyen de focalisation (3) configuré pour focaliser la lumière de diffusion Raman provenant d'une lumière diffusée par l'échantillon (18), le moyen de focalisation (3) comprenant une lentille de focalisation (24) et une ouverture confocale (20) ; et
un moyen de détection (26) configuré pour détecter la lumière de diffusion Raman focalisée,
dans lequel le moyen d'irradiation de lumière d'excitation (1) comprend un expanseur de faisceau (12) configuré pour expanser une section transversale de la lumière d'excitation et un moyen de mise en forme de lumière d'excitation (13) configuré pour mettre en forme une section transversale de la lumière d'excitation expansée en une forme approximativement annulaire,
**caractérisé en ce que**
le moyen de focalisation (3) comprend un moyen de blindage (22) configuré pour laisser passer la lumière de diffusion Raman d'une partie centrale approximative de la section transversale parmi la lumière de diffusion Raman qui a traversé l'ouverture confocale (20) et pour blinder la lumière de diffusion Raman d'une partie extérieure de la section transversale ; dans lequel
le moyen de mise en forme de lumière d'excitation (13) est un masque configuré pour blinder une partie centrale approximative de la section transversale de la lumière d'excitation, et
le moyen de blindage (22) est un diaphragme ayant une section transversale qui est une forme inversée d'une section transversale du masque (13).

2. Microscope Raman confocal comprenant :
une source de lumière (111) configurée pour émettre une lumière d'excitation ;
un moyen d'irradiation de lumière d'excitation (101) configuré pour irradier la lumière d'excitation sur un échantillon (118) ;
un moyen de focalisation (103) configuré pour focaliser la lumière de diffusion Raman provenant d'une lumière diffusée par l'échantillon (118), le moyen de focalisation (103) comprenant une lentille de focalisation (124) et une ouverture confocale (120) ; et
un moyen de détection (126) configuré pour détecter la lumière de diffusion Raman focalisée,
dans lequel le moyen d'irradiation de lumière d'excitation (101) comprend un expanseur de faisceau (112) configuré pour expanser une section transversale de la lumière d'excitation et un moyen de mise en forme de lumière d'excitation (130) configuré pour mettre en forme la section transversale de la lumière d'excitation en une forme approximativement annulaire,
**caractérisé en ce que**
le moyen de mise en forme de lumière d'excitation (130) est en outre configuré pour blinder la lumière de diffusion Raman se dirigeant vers une partie extérieure de la section transversale du moyen de mise en forme de lumière d'excitation (130).

3. Le microscope Raman confocal selon la revendication 2, dans lequel le moyen de mise en forme de lumière d'excitation (130) est un miroir à ouverture de forme approximativement annulaire ayant un trou en sa partie centrale approximative, dans lequel le moyen de mise en forme de lumière d'excitation (130) est configuré pour réfléchir la lumière de la partie extérieure de la section transversale parmi la lumière d'excitation lors de l'irradiation de la lumière d'excitation sur l'échantillon (118) en réfléchissant la lumière d'excitation par le miroir à ouverture, et une partie de la lumière de diffusion Raman diffusée par l'échantillon (118), c'est-à-dire la lumière de diffusion Raman vers une partie centrale approximative de la section transversale du miroir à ouverture, traverse le miroir à ouverture, et une autre partie de la lumière de diffusion Raman diffusée par l'échantillon (118), c'est-à-dire la lumière de diffusion Raman vers la partie extérieure de la section transversale du miroir à ouverture, est blindée par le miroir à ouverture.
